(19) Europäisches Patentamt
European Patent Office
Office européen des brevets

(11) EP 1 887 815 A1

(12) EUROPEAN PATENT APPLICATION

(43) Date of publication:
13.02.2008 Bulletin 2008/07

(51) Int Cl.:
*H04Q 7/32* (2006.01)   *H04L 12/28* (2006.01)

(21) Application number: 06300877.5

(22) Date of filing: 11.08.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(71) Applicant: MOTOROLA, INC.
Schaumburg, IL 60196 (US)

(72) Inventors:
• **Bonnevay, Vincent**
  **31047, TOULOUSE (FR)**

• **Batut, Eric**
  **32450, SAINT MARTIN GIMOIS (FR)**
• **Cendron-Martin, Bruno**
  **31200, TOULOUSE (FR)**

(74) Representative: **Joly, Jean-Jacques et al**
  **Cabinet Beau de Loménie**
  **158, rue de l'Université**
  **75340 Paris Cédex 07 (FR)**

(54) **Method, system, and apparatus for energy consumption estimation in a wireless terminal**

(57)    A user requests a selected service or application from a service/application server (245) through the user interface (115) of the mobile terminal (100). The estimate module (140) requests a related set of parameters from the requested application/service residing on service/application server (245). The estimate module (140) is configured to retrieve values for the received set of parameters. Thus, the estimate module (140) queries the service provider (250) for service provider parameter values and the mobile terminal (100) for mobile terminal parameter values. Based on the retrieved values of the set of parameter values, an energy consumption estimate is determined. The estimate module (140) further indicates the impact of the energy consumption estimate on the current battery level of the mobile terminal to the user for his decision.

EP 1 887 815 A1

**Description**

FIELD OF THE DISCLOSURE

This invention relates generally to energy management, more particularly, to a method, system, and handset for energy consumption estimation.

BACKGROUND

Recently, the expectations for cellular telephone and other wireless devices were focused on being able to reliably conduct voice calls. However, technological innovations have provided additional services and/or applications to be implemented on these devices. For example, television broadcast, video streaming, large file downloads, etc., are now integrated into the communication infrastructure supporting these wireless devices.

Although the new applications/services are useful, they consumer additional energy from the battery. For example, a television broadcast will use significant CPU time, radio frequency (RF) resources, and memory transfers, which all put a demand on the battery for an extended period of time. As a result, the "battery power meter", commonly used on embedded systems such as cellular telephones, is not reliable enough to determine whether or not the phone is capable of executing a highly energy consuming unique service/ application for an extended period of time.

Many patents describe and technologies exist that predict battery life. However, all these technologies are focused on battery voltages and charging studies or they are based on some general user activity profile. For example, European patent application, EP1588176 to Schoch Eberhard (published on 27 October 2005) describes a charge predictor that determines the available charge from a current discharge curve that represents the electrical properties of the battery and a condition value or parameter estimator that uses actual operating values ($U_{batt}$, $I_{batt}$, $C_{batt}$) of the battery to calculate battery operating values (Z) or parameters (P) for the mathematical battery model. Thus, conventional battery prediction technologies do not predict based on the unique attributes of a selected application/service. Moreover, conventional technologies may not predict on critical parameters of a selected application/service such as service duration, average network transfer speed, data format to profile energy consumption.

BRIEF DESCRIPTION OF THE DRAWINGS

Various features of the embodiments can be more fully appreciated, as the same become better understood with reference to the following detailed description of the embodiments when considered in connection with the accompanying figures, in which:

FIG. 1 illustrates an exemplary mobile device in accordance with an embodiment;

FIG. 2 illustrates an exemplary system where a mobile device can operate in accordance with another embodiment;

FIG. 3 illustrates an exemplary flow diagram in accordance with yet another embodiment; and

FIG. 4 illustrates an exemplary profile in accordance with yet another embodiment.

DETAILED DESCRIPTION

For simplicity and illustrative purposes, the principles of the present invention are described by referring mainly to exemplary embodiments thereof. However, one of ordinary skill in the art would readily recognize that the same principles are equally applicable to, and can be implemented in, all types of embedded systems, and that any such variations do not depart from the true spirit and scope of the present invention. Moreover, in the following detailed description, references are made to the accompanying figures, which illustrate specific embodiments. Electrical, mechanical, logical and structural changes may be made to the embodiments without departing from the spirit and scope of the present invention. The following detailed description is, therefore, not to be taken in a limiting sense and the scope of the present invention is defined by the appended claims and their equivalents.

Embodiments generally relate to a methods, systems, and apparatus for predicting power usage for an application. More specifically, an estimate module may be configured to request and/or retrieve key parameters from both the mobile terminal and the service provider of the requested application/service to provide a power usage estimate for the requested application/service.

An estimate module executing on the mobile terminal may query for a set of parameters or characteristics from the application/service in response to a request to run the application/service. Alternatively, a profile may be associated with the application and stored on the mobile terminal, where the profile includes the set of parameters. Each set of parameters for the respective application/service may be determined by the application/ service developer or the service provider. This set of parameters is unique and specific to the targeted application/service.

The set of parameters may provide the estimate module the information necessary to generate an energy consumption estimate. The set of parameters may comprise a subset of parameters that have to be obtained from the service provider of the requested application/service and a subset of parameters that can be obtained from the mobile terminal or device. For example, the estimate module may request a subset of parameters from a service provider such as program duration, frequency of use of radio resources, data format to decode for a digital video broadcast-handheld (DVB-H) service. The estimate module may also retrieve a subset of parameters from the mobile terminal such as current state of battery charge, current CPU load and memory usage. With the set of parameters, an estimate of the energy consumption is calculated based on mathematical weighting formula. Subsequently, the estimate module may inform the user of the impact of the requested application on the battery level of the mobile terminal.

The estimate module may be configured to store a set of key parameters for each application/service. Each set of key parameters for the respective application/service may be determined by the application/service developer or the service provider. This set of key parameters is unique and specific to the targeted application/service.

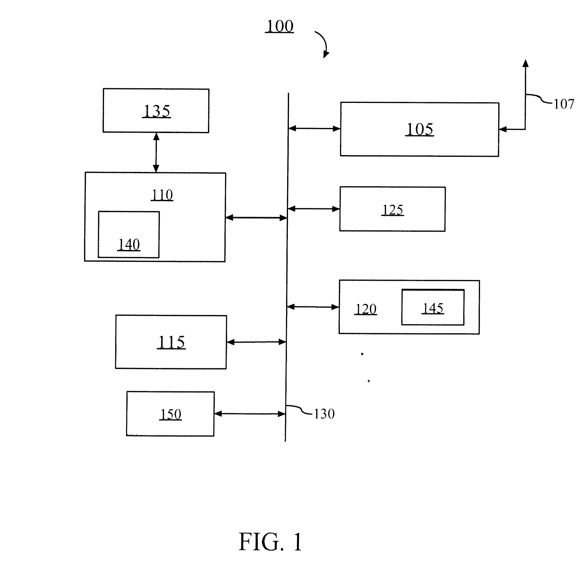

FIG. 1 illustrates an exemplary embodiment of a mobile terminal 100 in accordance with an embodiment. It should be readily apparent to those of ordinary skill in the art that the mobile terminal 100 depicted in FIG. 1 represents a generalized schematic illustration and that other components may be added or existing components may be removed or modified. Moreover, the mobile terminal 100 may be implemented using software components, hardware components, or combinations thereof.

As shown in FIG. 1, the mobile terminal 100 may include a communication interface 105, a processor 110, a user interface 115, a display module 120, and storage 125. The communication interface 105 may be configured to facilitate communication with a base station of a wireless communication network such as a 3G/ Universal Mobile Telecommunications System or other similar data oriented networks. More particularly, the communication interface 105 may transmit and receive digital voice packets through a radio frequency (RF) antenna 107. The communication interface 105 may also be configured to interface with a shared bus 130. Transmitting voice packets may be forwarded from the user interface 115 to the communication interface 105 over the shared bus 130 as well as received voice packets forwarded to the user interface 115 over the shared bus 130.

Processor 110 may be configured to interface with the shared bus 130. The processor 210 may be configured to implement the software that embodies the functionality of the mobile terminal 100, which may be stored in processor memory 135. The processor memory 135 may be programmable read only memory, flash memory or similar type of high speed persistent storage. Processor 110 may be an application specific integrated circuit, programmable field gate array, a microprocessor, digital signal processor or similar type of computing platform.

Storage 125 may be configured to store information for a user of the mobile terminal 100. For example, a contact list, downloaded music, and/or digital images may be stored in storage 125. The storage 125 may be implemented using a persistent storage such as flash memory. In some embodiments, the storage function of the processor memory 135 may be provided by storage 125.

User interface 115 may be configured to interface with the shared bus 130. The user interface 115 may also be configured to facilitate interaction with a user. As such, the user interface 115 may include media input and output mechanisms. For example, to facilitate voice communications, these mechanisms may include a microphone (not shown) for receiving analog speech signals from a user and a speaker (not shown) for playing out analog speech signals to a user. Further, the mobile terminal 100 may include digital/analog media signals and digital representations of those signals, for example, soft button on a keyless display.

The user interface 115 may also include a keypad (not shown). The keypad may be a Bell keypad, a QWERTY keyboard or similar mechanisms. In some embodiments, the keypad may be emulated on the display 120. The display 120 may be configured to provide a visual interface to assist in the access of the mobile terminal 100. For example, the display 120 may display a telephone number as entered by the user of the mobile terminal 100. The display 120 may also be configured to display a battery power level indicator 145, for example, an icon or graphical element, for the power source 150.

The power source 150 may be configured to provide the power to operate the mobile terminal 100. The power source 150 may be a rechargeable battery such as lithium-ion battery. The power source 150 may also include circuitry to determine the amount of charge in the power source 150 as known to those skilled in the art.

In accordance with various embodiments, the processor 110 may be configured to execute an estimate module 140. More particularly, the estimate module 140 may be configured to request and/or retrieve parameters to perform a power usage estimate for a requested application/service. In some embodiments, the parameters may be determined in a profile associated with the requested application/service.

When a user requests to run an application/service on the mobile terminal 100, the estimate module 140 may be configured to query for parameters related to the requested application/service from the requested application. The requested application may return a set of parameters which permit the estimate module 140 to calculate an energy consumption estimate. The set of parameters may include a subset of parameters that may be obtained from the service provider of the request application/service as well as a subset of parameters that may be obtained from the mobile terminal 100. The set of parameters may be determined by the service provider for each provided application/service. For example, the estimate module 140 may request service provider parameters such as program duration, frequency of use of radio resources, and data format to decode for a DVB-H service. The estimate module 140 may also retrieve values for mobile terminal parameters such as current state of battery charge, current CPU load and memory usage. With a complete set of parameters, an estimate of the energy consumption is calculated based on a mathematical weighting formula that is customized to the requested application/service. For example, an estimation of a video streaming is shown in equation (1)

$$E_c = W_1 \cdot (D_S) \cdot (P_L^2) + W_2 \cdot (V_{fr}) + W_3 \cdot S_l + W_4 \frac{T_{avg}}{v_{bt}} \qquad (1)$$

where, $E_c$ is energy consumption; $D_s$ is the size of the display; $P_L$ is the length of the program; $V_{fr}$ is the video framerate; $S_l$ is the sound level; $T_{avg}$ is the average throughput; $v_{bt}$ is the video bitrate; and $W_n$ are weighting coefficients dependent on architecture and implementation of the network. Subsequently, the estimate module 140 may inform the user of the impact of the requested application on the battery level of the mobile terminal 100.

In some embodiments, the estimate module 140 may be configured to store a set of parameters for each application/service. More specifically, a profile may be created for each application or service that contains the set of parameters. The profile may then be downloaded and stored in the mobile terminal 100. Thus, the estimate module 140 may access the profile to determine the set of parameters for a requested application/service.

Accordingly, the estimate module 140 may assist a user in the management of the battery life of the mobile terminal 100. When a user selects an application or service, the user can be notified of the impact of the requested application/service on the power life of the mobile terminal 100. If the requested application/service drains the power source 150 of the mobile terminal 100, the user may modify or cancel the requested application/service to comply with the remaining battery life. Thus, a user may maximize the operating time of the mobile terminal 100.

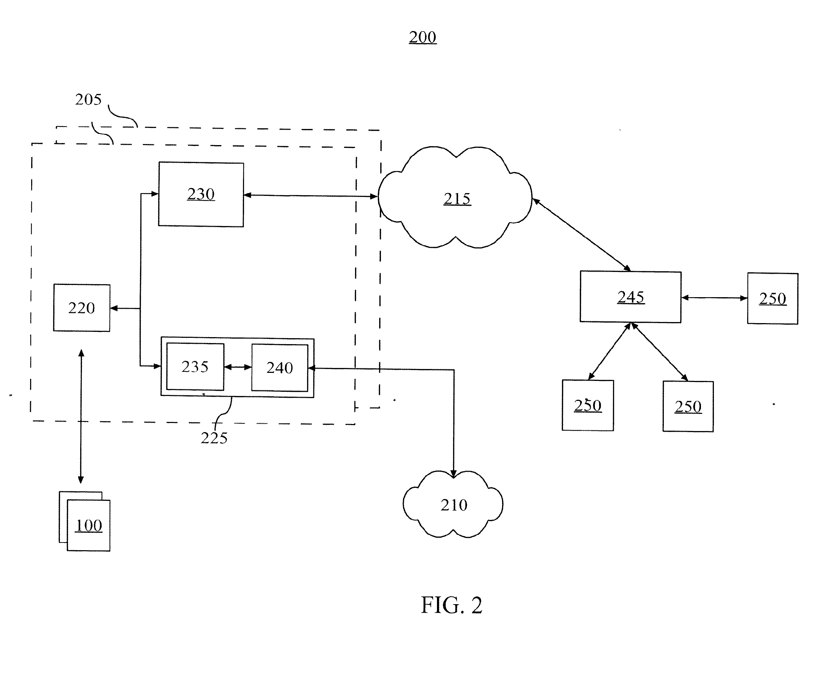

FIG. 2 illustrates an exemplary system 200 in accordance with another embodiment. It should be readily apparent to those of ordinary skill in the art that the system 200 depicted in FIG. 2 represents a generalized schematic illustration and that other components may be added or existing components may be removed or modified. Moreover, the system 200 may be implemented using software components, hardware components, or combinations thereof.

As shown in FIG. 2, the system 200 includes access cells 205. The access cells 205 may interface with a public switched telephone network ("PSTN") 210. The access cells 205 may also interface with an Internet Protocol ("IP") network 215. The IP network 215 may be the internet, a private local area network, a private wide area network, or combinations thereof.

Each access cell 205 may include an enhanced base transceiver station ("EBTS") 220. The EBTS 220 may be configured to transmit and receive voice packets from mobile devices 100 within the coverage area of the EBTS 220. The EBTS 220 may also include a service integration module (not shown) that is configured to determine the current state of each mobile device in the coverage area of the EBTS 220.

The EBTS 220 may interface with an interconnect call module 225 and an IP services module 230. The interconnect call module 225 may include a base site controller ("BSC") 235 coupled with a mobile switching center ("MSC") 240 for handling cellular and circuit switched calls. The MSC 240 may also be interfaced with a home location and visitor location registers (not shown) for providing mobility management as known in the art. The BSC 235 can provide control and concentration functions for one or more EBTS sites and their associated mobile terminals 100.

The IP services module 230 may be configured to provide Internet protocol services for the mobile terminals 100. For example, push-to-talk communication, internet browsing, video streaming, television broadcasts, email functions, and other similar services may be provided through the IP services module 230.

Service/application servers 245 may be accessed through the IP network 215 via the access cells 205. The service/application servers 245 may provide respective applications/services for the mobile terminals 100, for example, DVB-H broadcasts, web radio, digital audio broadcasting, audio streaming, etc. The user may access these service/application servers 245 through their mobile terminals as known to those skilled in the art. The service application servers 245 may be interfaced with the service providers 250 to provide the requested application/service to the user.

Accordingly, when a user requests a selected service or application from a service/application server 245 through the user interface 115 of the mobile terminal 100, the estimate module 140 may request a set of parameters from the requested application/service residing on service/application server 245. The estimate module 140 may be configured to retrieve values for the received set of parameters. Thus, the estimate module 140 may query the service provider 250 for service provider parameters and the mobile terminal 100 for mobile terminal parameters. Based on the retrieved values of the set of parameters, an energy consumption estimate may be determined. The estimate module 140 may be further configured to indicate the impact of the energy consumption estimate on the current battery level of the mobile terminal.

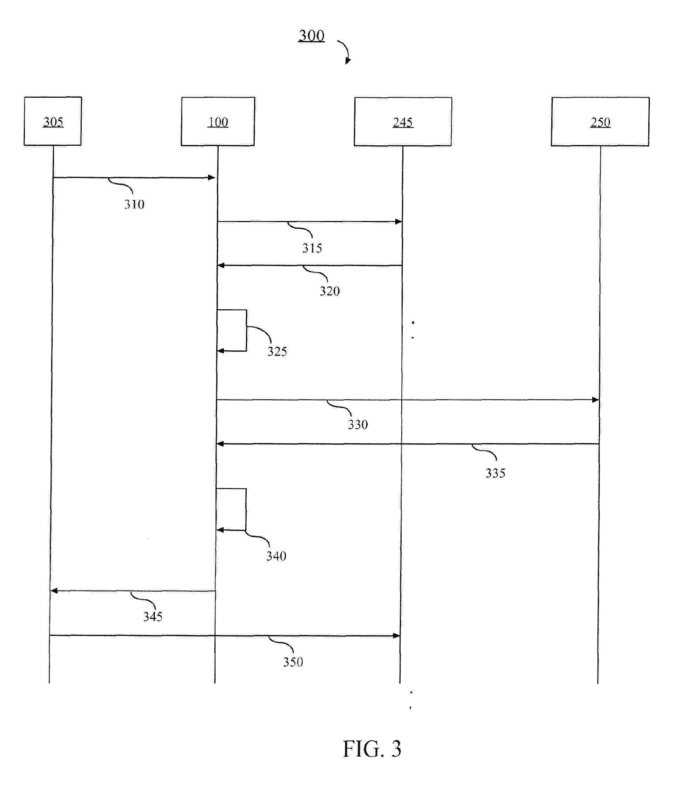

FIG. 3 illustrates a process flow diagram 300 executed in the system in accordance with an embodiment. It should be readily apparent to those of ordinary skill in the art that the process flow diagram 300 depicted in FIG. 3 represents a generalized schematic illustration and that other steps may be added or existing steps may be removed or modified.

As shown in FIG. 3, user 305 may request to execute an application or service on the mobile terminal 100, in step 310. More specifically, a user may select an application or service on the mobile terminal 100 through the user interface 115. Application and/or service may be provided by the provider of network 200 or the user may have downloaded applications into the mobile terminal 100.

In step 315, the estimate module 140 requests a set of parameters from the selected service/application 245. The selected service/application 245 may return a list of parameters that are to be used by the estimate module 140 to determine an energy consumption estimate, in step 320. In some embodiments, instead of querying the application for the set of parameters, the mobile terminal 100 may also store an associated profile with an application (or service) which includes the set of parameters. The profile may be provided by the developer or provider of the application/service.

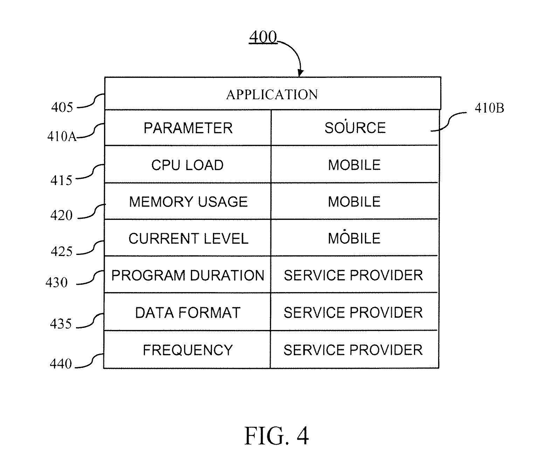

As an example of a set of parameters, FIG. 4 illustrates a list of parameters for a DVB-H service. As shown in FIG. 4, the list of parameters (or profile) 400 may be data structure such as a table, linked list, or other similar structure. The profile 400 may optionally include a title record 405 which describes the application. The profile 400 may also optionally include a record comprising a parameter field 410a and a source field 410b. The parameter field 410a may define a parameter of the application/ service. The source field 410b may define where the value of the respective parameter may be retrieved. Records 415-425 illustrate an exemplary subset of parameters (CPU load, memory usage, current battery level, respectively) that can be retrieved internally, i.e., from the mobile terminal 100. Records 430-440 illustrate an exemplary subset of parameters (program duration, data format, and frequency, respectively) that can be retrieved from the service provider 250.

Returning to FIG. 3, having received or retrieved the set of parameters, the estimate module 140 may retrieve the mobile terminal parameters from the set of parameters, in step 330. The estimate module 140 may then query the service provider 250 for the service provider of parameters, in step 330.

In step 335, the service provider 250 may return the requested values for the service provider parameters. In step 340, the estimate module 140 may be configured to calculate the energy consumption estimate based on a mathematical weighted formula or heuristic optimized for the application/service.

In step 345, the estimate module 140 may be configured to indicate to the user on the user interface 115 the impact that the requested application has on the current battery level. For example, if the requested application/service exceeds the current battery life, the estimate module 140 may display a message that the requested application may induce a power-off within 20 minutes. In step 350, the user may then decide whether or not he wants to execute or modify the selected application or service.

Certain embodiments may be performed as a computer program. The computer program may exist in a variety of forms both active and inactive. For example, the computer program can exist as software program(s) comprised of program instructions in source code, object code, executable code or other formats; firmware program(s); or hardware description language (HDL) files. Any of the above can be embodied on a computer readable medium, which include storage devices and signals, in compressed or uncompressed form. Exemplary computer readable storage devices include conventional computer system RAM (random access memory), ROM (readonly memory), EPROM (erasable, programmable ROM), EEPROM (electrically erasable, programmable ROM), and magnetic or optical disks or tapes. Exemplary computer readable signals, whether modulated using a carrier or not, are signals that a computer system hosting or running the present invention can be configured to access, including signals downloaded through the Internet or other networks. Concrete examples of the foregoing include distribution of executable software program(s) of the computer program on a CD-ROM or via Internet download. In a sense, the Internet itself, as an abstract entity, is a computer readable medium. The same is true of computer networks in general.

While the invention has been described with reference to the exemplary embodiments thereof, those skilled in the art will be able to make various modifications to the described embodiments without departing from the true spirit and scope. The terms and descriptions used herein are set forth by way of illustration only and are not meant as limitations. In particular, although the method has been described by examples, the steps of the method may be performed in a different order than illustrated or simultaneously. Those skilled in the art will recognize that these and other variations are possible within the spirit and scope as defined in the following claims and their equivalents.

**Claims**

**1.** A power consumption estimation method in a wireless communication device, the method comprising:

determining at least one key parameter of a set of key parameters associated with an application to be executed on the wireless communication device; and

determining an estimated power consumption based on at least one key parameter for the wireless communication device.

2. The method of claim 1, wherein the determining at least one key parameter of the set of key parameters associated with the application further comprises requesting at least one key parameter of the set of key parameters from a network.

3. The method of claim 2, wherein the set of key parameters includes a program duration, frequency of radio usage, and data format.

4. The method of claim 1, wherein the determining at least one key parameter of the set of key parameters associated with the application further comprises requesting at least one key parameter of the set of key parameters from a mobile terminal.

5. The method of claim 4, wherein the set of key parameters further comprises a current CPU load and memory usage.

6. The method of claim 1, determining the at least one key parameter of the set of key parameters associated with an application embodies as a digital video broadcast-handheld application.

7. The method of claim 1, wherein the application is one of file download, a web radio, digital audio broadcast, and audio streaming.

8. The method of claim 1, wherein the determination of the estimated power consumption based on at least one key parameter further comprises determining the estimated power consumption based on a mathematical weighting formula.

9. An apparatus for performing the method of claim 1.

10. A computer-readable medium comprising computer-executable instructions for performing the method of claim 1.

11. An apparatus configured to estimate power consumption, the apparatus comprising:

a memory configured to store a plurality of profiles, each profile associated with an application, each profile comprising a set of parameters for the associated application;
a device interface configured to provide a communication channel between the apparatus and a network;
a processor interfaced with the memory; and
an estimate module configured to be stored in the memory and executed by the processor, wherein the estimate module is configured to determine a set of parameters for a selected application and determine an estimated power consumption based on the set of parameters.

12. The system of claim 11, wherein the estimate module is further configured to execute a mathematical weighting formula to determine the estimated power consumption.

13. The system of claim 11, further comprising a battery configured to provide power to the apparatus and a battery level indicator configured to indicate an amount of power remaining in the battery.

14. The system of claim 13, wherein the estimate module is configured to indicate an effect of the estimated power consumption on a battery level of the apparatus.

15. The system of claim 11, wherein the plurality of profiles are provided by a developer of an application.

16. A system to provide a power consumption estimate, the system comprising:

a network configured to store and provide data;
a mobile device configured to interface with the network through a network interface and powered by a battery, wherein the mobile device further comprises a processor configured to determine a plurality of values, each value associated with a parameter of a selected service, determine an estimated power consumption for the selected service, and indicate an impact of the estimated power consumption on an amount of power stored on the battery.

**17.** The system of claim 17, wherein the processor is further configured to execute a mathematical weighting formula to determine the estimated power consumption.

**18.** The system of claim 16, wherein the processor is further configured to query the network for a subset of the plurality of values.

**19.** The system of claim 16, wherein the processor is further configured to query the mobile device for a subset of the plurality of values.

**20.** The system of claim 16, wherein the service is one of a download service, a text messaging service, a video broadcast and a mapping service.

FIG. 1

FIG. 2

300

305    100    245    250

310

315

320

325

330

335

340

345

350

FIG. 3

400

| APPLICATION | |
|---|---|
| PARAMETER | SOURCE |
| CPU LOAD | MOBILE |
| MEMORY USAGE | MOBILE |
| CURRENT LEVEL | MOBILE |
| PROGRAM DURATION | SERVICE PROVIDER |
| DATA FORMAT | SERVICE PROVIDER |
| FREQUENCY | SERVICE PROVIDER |

FIG. 4

European Patent Office

**EUROPEAN SEARCH REPORT**

Application Number

EP 06 30 0877

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/021541 A (MOTOROLA INC [US]) 11 March 2004 (2004-03-11) | 1-7, 9-11,13, 14,16-20 | INV. H04Q7/32 |
| Y | * abstract * <br> * page 1, line 10 - line 34 * <br> * page 5, line 10 - line 19 * <br> * page 7, line 21 - line 28 * <br> * page 4, line 20 - line 36 * <br> * page 8, line 27 - line 31 * <br> * page 9, line 20 - line 29 * <br> * page 10, line 26 - line 33 * <br> * page 11, line 28 - line 30 * <br> * figure 1 * | 8,12 | ADD. H04L12/28 |
| X | WO 2005/069108 A (KONINKL PHILIPS ELECTRONICS NV [NL]; BELL DAVID A [GB]) 28 July 2005 (2005-07-28) | 1-11, 13-20 | |
| A | * abstract * <br> * page 1, line 17 - line 24 * <br> * page 3, line 12 - page 4, line 2 * <br> * page 5, line 27 - line 28 * <br> * page 6, line 10 - page 7, line 11 * <br> * page 7, line 21 - line 26 * <br> * figure 2 * | 8,12 | |
| Y | US 2005/048960 A1 (YAMAUCHI MASAHIRO [JP] ET AL) 3 March 2005 (2005-03-03) | 8,12 | |
| A | * paragraphs [0021], [0022] * <br><br> * paragraphs [0089] - [0092] * <br> * paragraphs [0107] - [0109] * <br> * paragraphs [0143] - [0152] * <br> * figures 5,9,16,17,29,29 * | 1,9-11, 16 | |

TECHNICAL FIELDS SEARCHED (IPC)

H04Q

The present search report has been drawn up for all claims

| Place of search | Date of completion of the search | Examiner |
|---|---|---|
| Munich | 16 January 2007 | Rüschmann, Frank |

EPO FORM 1503 03.82 (P04C01)

## ANNEX TO THE EUROPEAN SEARCH REPORT
## ON EUROPEAN PATENT APPLICATION NO.

EP 06 30 0877

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2007

| Patent document cited in search report | | Publication date | Patent family member(s) | | Publication date |
|---|---|---|---|---|---|
| WO 2004021541 | A | 11-03-2004 | AU<br>CN<br>US | 2003261372 A1<br>1679218 A<br>2004041538 A1 | 19-03-2004<br>05-10-2005<br>04-03-2004 |
| WO 2005069108 | A | 28-07-2005 | EP | 1706807 A1 | 04-10-2006 |
| US 2005048960 | A1 | 03-03-2005 | NONE | | |

For more details about this annex : see Official Journal of the European Patent Office, No. 12/82

**EP 1 887 815 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1588176 A